# FASCICULE DE BREVET EUROPEEN

(11) **EP 1 238 695 B1**
(45) Date de publication et mention de la délivrance du brevet: **22.12.2004**
(21) Numéro de dépôt: 02370006.5
(22) Date de dépôt: 05.03.2002
(51) Int. Cl.: B01D 53/26, B01D 53/04

(54) **Dispositif de controle de l'écoulement gazeux**
Vorrichtung zur Gasstromsteuerung
Control device for a gas flow

(30) Priorité: 09.03.2001 FR 0103269
(43) Date de publication de la demande: 11.09.2002
(73) Titulaire: Chaumeca-Gohin, S.A., 59000 Lille (FR)
(72) Inventeur: Tetard, Henry Louis, 59510 Hem (FR); Capon, Yves-Ren-, 59155 Faches Thumesnil (FR)
(74) Mandataire: Hennion, Jean-Claude

(56) Documents cités:
- GB-A- 2 103 954
- US-A- 4 737 170
- US-A- 4 783 205
- US-A- 5 983 516

## Description

L'invention se rapporte à dispositif de contrôle de l'écoulement gazeux.

L'invention se rapporte également à un sécheur par adsorption comportant ce dispositif de contrôle.

Dans de nombreuses applications, l'air ou le gaz utilisé dans les installations doit être dépourvu d'eau et donc séché.

Pour ce faire, on utilise généralement un sécheur par adsorption.

Un sécheur par adsorption comprend classiquement au moins deux capacités contenant chacune un produit adsorbant, un dispositif d'alimentation qui, alternativement, alimente en fluide à traiter l'une des capacités puis l'autre et un dispositif pour, lorsqu'une des capacités est utilisée pour sécher l'air, régénérer la capacité non active.

Ainsi, le principe consiste à faire circuler l'air à traiter dans une capacité par exemple depuis le haut vers le bas pour sécher l'air et de prélever une faible partie de l'air séché pour l'introduire du bas vers le haut dans l'autre capacité pour la régénérer.

Ce type de système fonctionne avec, par exemple, de l'air sous pression de l'ordre de sept bars et il est souvent appelé « heatless ».

Ce type de sécheur se présente donc sous la forme de deux enveloppes mécaniques distinctes, disposées côte à côte, et reliées par des conduites aboutissant aux deux dispositifs précités.

On déplore un manque de compacité de ces sécheurs et des coûts de fabrication et de montage relativement élevés.

Dans le domaine du séchage, on connaît un sécheur EP-A-279.495 selon lequel on a placé, dans une enveloppe notamment circulaire, des cloisons radiales pour fractionner le volume en huit parties égales et, au centre de cette cloison, un tiroir rotatif de distribution pour alimenter certaines des chambres tandis que d'autres chambres sont régénérées.

Un tel dispositif ne peut pas fonctionner avec de l'air sous pression en raison des difficultés à réaliser une étanchéité suffisante entre le tiroir de distribution et les différents volumes.

L'invention propose un dispositif de contrôle de l'écoulement gazeux nouveau.

A cet effet, l'invention a pour objet un dispositif de contrôle de l'écoulement des fluides gazeux qui, pendant une période déterminée et alternativement :
- d'une part alimente en air à traiter l'une des capacités dite alors capacité active et
- d'autre part régénère l'autre capacité par introduction d'air sec dans ladite capacité
caractérisé en ce que le dispositif de contrôle comprend un canal collecteur commun aux capacités débouchant radialement dans ce canal commun, au droit de chacun des passages aménagés dans l'épaisseur des flasques pour communiquer avec les capacités, une chambre logeant un clapet qui, guidé en translation, présente dans sa face d'obturation tournée vers le passage précité, un ajutage de sorte que, lorsque le clapet est plaqué sur son siège du fait de la pression régnant dans le collecteur, une partie du fluide gazeux est cependant envoyée dans la capacité pour la régénération.

Elle a également pour objet un sécheur pourvu dudit dispositif de contrôle.

L'invention sera bien comprise à l'aide de la description ci-après faite à titre d'exemple non limitatif en regard du dessin qui représente schématiquement :
- figure 1 : une vue en coupe d'un sécheur partiellement monté,
- figure 2 : une vue de face d'un sécheur,

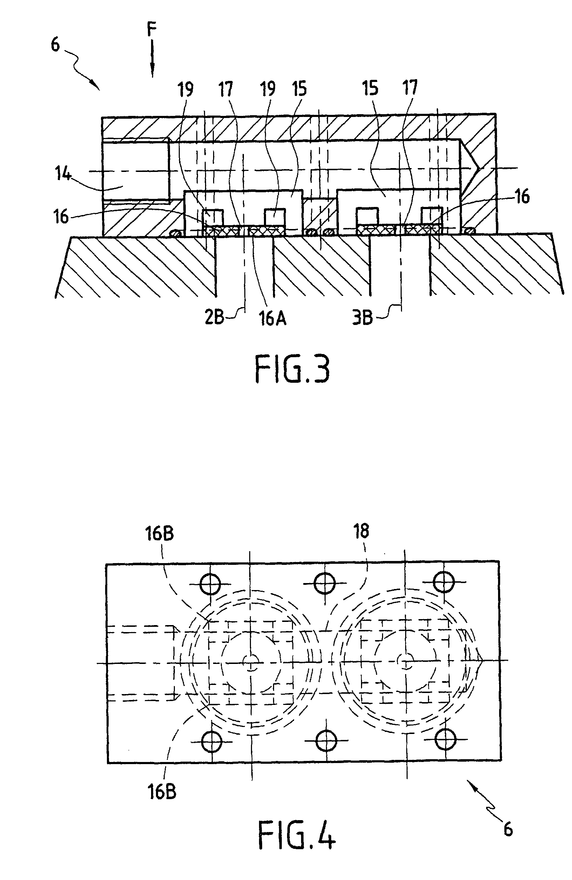

- figure 3 : vue en coupe d'un détail du sécheur,
- figure 4 : une vue selon F de la figure 3.

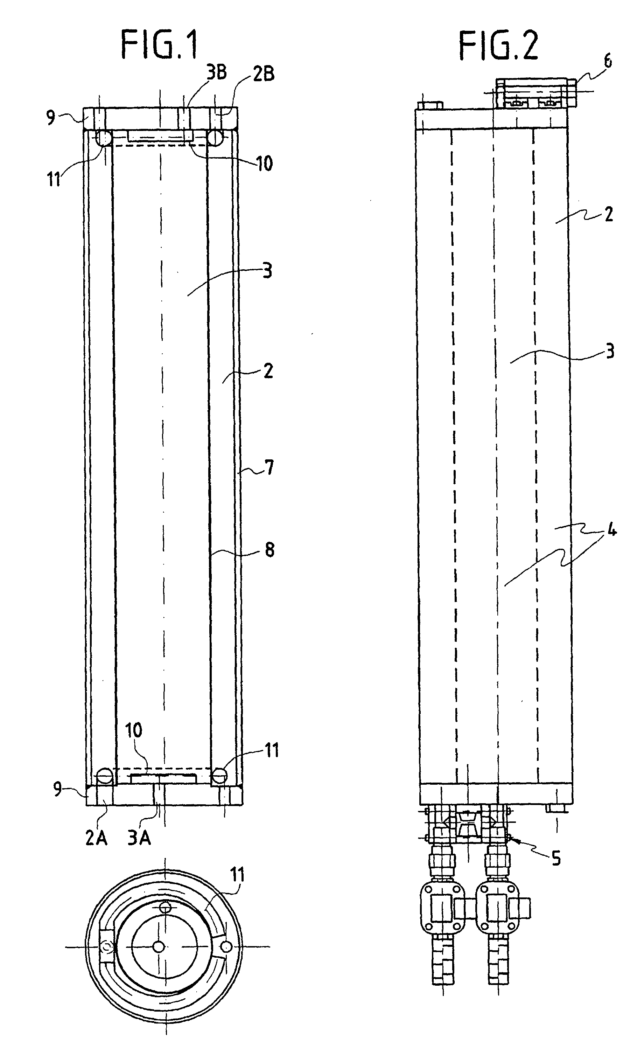

En se reportant au dessin, on voit un sécheur (figure 2) comprenant :
- deux capacités 2,3 contenant chacune un matériau 4 adsorbant,
- un dispositif 5,6 de contrôle de l'écoulement des fluides gazeux qui, pendant une période déterminée et alternativement, d'une part alimente en air à traiter l'une des capacités dite alors capacité active et d'autre part régénère l'autre capacité par introduction d'air sec dans ladite capacité.

Ainsi, le principe consiste à faire circuler l'air à traiter dans une capacité par exemple depuis le bas vers le haut pour retirer l'eau et, en sortie de cette capacité, de prélever une faible partie de l'air séché pour l'introduire du haut vers le bas dans l'autre capacité pour régénérer le matériau adsorbant.

Lorsque le matériau adsorbant dans la capacité active est saturé, on inverse les alimentations pour utiliser alors la capacité régénérée et régénérer l'autre.

Ce sécheur 1 est destiné à traiter de l'air sous une pression supérieure à la pression atmosphérique.

La pression de travail est souvent de l'ordre de cinq à dix bars.

Ce type de sécheur est souvent dit du type « heatless », c'est à dire sans production de chaleur.

Selon l'invention, le sécheur (figure 1) comprend dans une enveloppe externe 7, une enveloppe 8 interne montée concentrique délimitant ainsi deux chambres 2, 3 totalement indépendantes, chacune étant reliée par une entrée 2A, 3A et une sortie 2B, 3B aux dispositifs de contrôle de l'écoulement des fluides gazeux précités.

Le bas et le haut de ces chambres sont fermés par une flasque 9 pourvue des passages 2A, 2B, 3A, 3B, aménagés dans l'épaisseur de la flasque pour les entrée et sortie des fluides gazeux.

La partie centrale de la flasque forme la paroi d'extrémité de la capacité interne et la partie externe de la flasque forme la paroi d'extrémité de la capacité externe.

Ces flasques sont assemblées par soudure ou avec des tirants sur les parties cylindriques.

Chaque flasque comporte en sa face interne des dispositifs 10 et 11 de diffusion spatiale du fluide gazeux pour répartir celui-ci sur la section de la chambre considérée qui, notamment pour la chambre dite externe, est annulaire.

Le moyen de diffusion du gaz est un ressort spiralé.

Du fait que ce ressort soit cintré lors de sa mise en place dans la rainure, du coté extérieur, les spires ne sont plus jointives et forment des diffuseurs.

L'air n'est donc plus injecté en un seul point mais en une multitude de points.

On obtient donc un dispositif compact.

Le nombre de pièces est réduite ainsi que la matière utilisée.

Les temps de montage sont également réduits.

Comme indiqué plus haut, on a prévu un dispositif de contrôle de l'écoulement des fluides gazeux.

Par exemple, en partie basse, généralement, on a un système 5 qui permet alternativement d'introduire de l'air à traiter dans l'une ou l'autre des chambres.

Ce système étant connu, il ne sera pas décrit ci-après.

En partie haute, on équipe le sécheur d'un dispositif 6 qui a pour tâche de collecter l'air traité provenant d'une chambre et d'injecter une partie de cet air dans la chambre en cours de régénération.

Ce dispositif comprend :
- un canal 14 collecteur commun aux capacités 2,3,
- débouchant radialement dans ce canal commun, au droit de chacun des passages 2B, 3B, aménagés dans l'épaisseur des flasques pour communiquer avec les capacités, une chambre 15 logeant un clapet 16 qui, guidé en translation, présente dans sa face d'obturation tournée vers le passage précité, un ajutage 17 de sorte que, lorsque le clapet est plaqué sur son siège du fait de la pression régnant dans le collecteur, une partie du fluide gazeux est cependant envoyée dans la capacité pour la régénération.

Sous l'effet de la pression de l'air circulant dans l'une des chambres, le clapet de cette chambre est écarté de son siège et laisse passer l'air vers le canal collecteur, lequel communique avec l'autre chambre contenant l'autre clapet et le plaque sur son siège.

L'ajutage prévu dans ce clapet permet alors de prélever une partie de l'air sec pour l'introduire dans la capacité qui se régénère.

Avantageusement, la chambre 15 est de section circulaire et le clapet de section polygonale est relativement épais de sorte que les arêtes 16B du clapet constituent des moyens de guidage en translation et de positionnement du clapet avec la face interne cylindrique de la chambre.

La communication entre la chambre et le canal collecteur se présente sous la forme d'une large fente 18.

Le canal collecteur est obtenu en alésant la pièce de sorte que le canal est de section circulaire.

La chambre 15 qui loge le clapet est un alésage dont le fond se situe à une distance de l'axe longitudinal du canal collecteur inférieure à celle du rayon de ce canal.

La face arrière du clapet opposée à la face obturante, venant en appui sur le siège de l'obturateur, présente des excroissances 19 de sorte que cette face arrière ne peut s'appliquer sur toute sa surface dans le fond de l'alésage et obturer le passage vers le canal collecteur.

Dans l'exemple de réalisation, la chambre logeant le clapet est de section circulaire et le clapet est de section carrée et quatre excroissances empêchent le clapet d'obturer le passage vers le collecteur commun.

On a donc réalisé un système simple d'utilisation et de fabrication relativement simple.

Des joints toriques assurent l'étanchéité.

Le dispositif n'est pas limité à deux chambres avec clapet. Suivant le nombre de capacités, on peut multiplier les chambres 15 et les clapets. Les capacités peuvent alors être disposées côte à côte.

## Revendications

1. Dispositif de contrôle, pour un sécheur par adsorption, de l'écoulement des fluides gazeux entre, au moins deux capacités qui, pendant une période déterminée et alternativement, d'une part alimente en air à traiter l'une des capacités dite alors capacité active et d'autre part régénère l'autre capacité par introduction d'air sec dans ladite capacité,
ce dispositif de contrôle étant **caractérisé en ce qu'**il comprend :
- un canal (14) collecteur commun aux capacités (2),(3)
- débouchant radialement dans ce canal commun, au droit de chacun des passages (2B), (3B), aménagés dans l'épaisseur des flasques des capacités pour communiquer avec lesdites capacités, une chambre (15) logeant un clapet (16) qui, guidé en translation, présente dans sa face d'obturation tournée vers le passage précité, un ajutage (17) de sorte que, lorsque le clapet est plaqué sur son siège du fait de la pression régnant dans le collecteur, une partie du fluide gazeux est cependant envoyée dans la capacité pour la régénération,
- la chambre (15) étant de section circulaire et le clapet est de section polygonale relativement épais de sorte que les arêtes (16B) du clapet constituent des moyens de guidage en translation et de positionnement du clapet avec la face interne cylindrique de la chambre (15).

2. Dispositif de contrôle selon la revendication 1 **caractérisé en ce que** la chambre (15) qui loge le clapet est un alésage dont le fond se situe à une distance de l'axe longitudinal du canal collecteur inférieure à celle du rayon de ce canal.

3. Dispositif de contrôle selon la revendication 1 ou 2 **caractérisé en ce que** la face arrière du clapet opposée à la face obturante venant en appui sur le siège de l'obturateur présente des excroissances (19) de sorte que cette face arrière ne peut s'appliquer sur toute sa surface dans le fond de l'alésage et obturer le passage vers le canal collecteur.

4. Dispositif de contrôle selon la revendication 1 **caractérisé en ce que** la chambre logeant le clapet est de section circulaire et le clapet est de section carrée, quatre excroissances empêchant le clapet de d'obturer le passage vers le collecteur commun.

5. Sécheur par adsorption comprenant deux capacités et un dispositif de contrôle selon l'une quelconque des revendications 1 à 4 **caractérisé en ce que** le sécheur comprend dans une enveloppe externe (7), une enveloppe (8) interne montée concentrique délimitant ainsi deux chambres (2),(3) totalement indépendantes, chacune étant reliée par une entrée (2A), (3A) et une sortie (2B), (3B) aux dispositifs de contrôle de l'écoulement des fluides gazeux précités.

6. Sécheur par adsorption selon la revendication 5 **caractérisé en ce que** le bas et le haut de ces chambres sont fermés par une flasque (9) pourvue des passages (2A) (2B) (3A) (3B) aménagés dans l'épaisseur de la flasque pour les entrée et sortie des fluides gazeux.

7. Sécheur par adsorption selon la revendication 6 **caractérisé en ce que** chaque flasque comporte en sa face interne des dispositifs (10) et (11) de diffusion spatiale du fluide gazeux pour répartir celui-ci sur la section de la chambre considérée qui, notamment pour la chambre dite externe, est annulaire.

8. Sécheur par adsorption selon la revendication 7 **caractérisé en ce que** le moyen de diffusion du gaz dans la chambre annulaire externe est un ressort spiralé.

## Patentansprüche

1. Vorrichtung zur Steuerung bzw. Kontrolle des Fließens von Gasströmen zwischen mindestens zwei Räumen (Behältern) eines Adsorptionstrockners, die während einer vorgegebenen Zeitdauer und abwechselnd einerseits einem der Räume, nachstehend als aktiver Raum bezeichnet, zu behandelnde Luft zuführt und andererseits den anderen Raum durch Einführung von trockener Luft in diesen Raum regeneriert, wobei diese Steuerungs- bzw. Kontroll-Vorrichtung **dadurch gekennzeichnet ist, dass** sie umfasst:
- eine beiden Räumen (2), (3) gemeinsame Sammel-Rohrleitung (14),
- radial einmündend in diese gemeinsame Rohrleitung jeweils oberhalb von Durchgängen (2B), (3B), die in der Dicke von Flanschen der Räume angeordnet sind, um die genannten Räume miteinander zu verbinden, eine Kammer (15), die ein Absperrventil (16) enthält, das translatorisch geführt ist und in seiner Verschlussoberfläche, die dem genannten Durchgang zugewandt ist, ein Mundstück (17) in der Weise aufweist, dass dann, wenn das Ventil auf seinem Sitz aufliegt als Folge des Druckes, der in der Sammel-Rohrleitung herrscht, ein Teil des Gasstromes dennoch in den Raum eingeführt wird, um ihn zu regenerieren,
- wobei die Kammer (15) einen kreisförmigen Querschnitt hat und das Ventil einen verhältnismäßig breiten (großen) polygonalen Querschnitt hat, derart, dass die Ecken (16B) des Ventils zusammen mit der inneren zylindrischen Oberfläche der Kammer (15) Einrichtungen zur translatorischen Führung und zur Positionierung des Ventils darstellen.

2. Vorrichtung zur Steuerung bzw. Kontrolle nach Anspruch 1, **dadurch gekennzeichnet, dass** die Kammer (15), in der das Ventil angeordnet ist, eine Bohrung darstellt, deren unterer Teil in einem Abstand von der Längsachse der Sammel-Rohrleitung angeordnet ist, der kleiner ist als der Radius dieser Sammel-Rohrleitung.

3. Vorrichtung zur Steuerung bzw. Kontrolle nach Anspruch 1 oder 2, **dadurch gekennzeichnet, dass** die rückwärtige Oberfläche des Ventils, die der Verschlussoberfläche gegenüberliegt, die auf dem Sitz des Verschlusses aufliegt, Ausstülpungen (19) aufweist, der Art, dass diese rückwärtige Oberfläche im unteren Teil der Bohrung nicht auf ihrer gesamten Oberfläche aufliegen und dadurch den Durchgang in die Sammel-Rohrleitung nicht verschließen kann.

4. Vorrichtung zur Steuerung bzw. Kontrolle nach Anspruch 1, **dadurch gekennzeichnet, dass** die Kammer, in der das Ventil angeordnet ist, einen kreisförmigen Querschnitt hat und dass das Ventil einen quadratischen Querschnitt hat, wobei vier Ausstülpungen verhindern, dass das Ventil den Durchgang in die Sammel-Rohrleitung verschließen kann.

5. Adsorptionstrockner, der zwei Räume und eine Vorrichtung zur Steuerung bzw. Kontrolle nach einem der Ansprüche 1 bis 4 umfasst, **dadurch gekennzeichnet, dass** der Trockner innerhalb einer äußeren Hülle (7) eine innere Hülle (8) aufweist, die konzentrisch so angeordnet ist, dass sie zwei Kammern (2), (3), die vollständig unabhängig voneinander sind, begrenzt, wobei jede Kammer durch einen Einlass (2A), (3A) und einen Auslass (2B), (3B) mit Vorrichtungen zur Steuerung bzw. Kontrolle des Fließens der genannten Gasströme verbunden ist.

6. Adsorptionstrockner nach Anspruch 5, **dadurch gekennzeichnet, dass** die untere und die obere dieser Kammern durch einen Flansch (9) verschlossen sind, der mit Durchgängen (2A), (2B), (3A), (3B) ausgestattet ist, die in der Wanddicke des Flansches angeordnet sind, für den Einlass und den Auslass von Gasströmen.

7. Adsorptionstrockner nach Anspruch 6, **dadurch gekennzeichnet, dass** jeder Flansch in seiner inneren Oberfläche Einrichtungen (10) und (11) zur räumlichen Diffusion des Gasstromes aufweist, um diesen über den Querschnitt der fraglichen Kammer zu verteilen, die, insbesondere was die genannte äußere Kammer angeht, ringförmig ist.

8. Adsorptionstrockner nach Anspruch 7, **dadurch gekennzeichnet, dass** die Einrichtung zur Diffusion des Gases in die äußere ringförmige Kammer eine spiralige Feder ist.

## Claims

1. Device for controlling, for an adsorber dryer, the flow of gaseous fluids between at least two enclosures, which device, for a given period and alternately, on the one hand supplies air to be treated to one of the enclosures, therefore referred to as the active enclosure, and on the other hand regenerates the other enclosure by introducing dry air into said enclosure, this control device being **characterised in that** it comprises:
- a collecting duct (14) that is common to the enclosures (2), (3)
- opening radially into this common duct, in line with each of the passages (2B), (3B), provided in the thickness of the flanges of the enclosures in order to communicate with said enclosures, a chamber (15) housing a valve (16) which, guided in translation, has in its blocking face turned toward the aforementioned passage a nozzle (17), such that when the valve is pinned to its seat as a result of the pressure prevailing in the collector, a portion of the gaseous fluid is nonetheless sent into the enclosure for regeneration,
- the chamber (15) having a circular section and the valve having a relatively thick polygonal section, such that the edges (16B) of the valve form means for guiding in translation and positioning the valve with the internal cylindrical face of the chamber (15).

2. Control device according to claim 1, **characterised in that** that the chamber(15) that houses the valve is a bore, the base of which is located at a distance from the longitudinal axis of the collecting duct that is shorter than that of the radius of this duct.

3. Control device according to either claim 1 or claim 2, **characterised in that** the rear face of the valve that is remote from the blocking face resting on the seat of the blocking member has protuberances (19), such that this rear face may not be applied over all of its area in the base of the bore and block the passage toward the collecting duct.

4. Control device according to claim 1, **characterised in that** the chamber housing the valve has a circular section and the valve has a square section, four protuberances preventing the valve from blocking the passage toward the common collector.

5. Adsorber dryer comprising two enclosures and a control device according to any one of claims 1 to 4, **characterised in that** the dryer comprises, in an outer case (7), a concentrically mounted inner case (8), thus delimiting two completely independent chambers (2), (3), each being connected by an inlet (2A), (3A) and an outlet (2B), (3B) to the aforementioned devices for controlling the flow of gaseous fluids.

6. Adsorber dryer according to claim 5, **characterised in that** the bottom and the top of these chambers are closed by a flange (9) equipped with the passages (2A), (2B), (3A), (3B) provided in the thickness of the flask for letting the gaseous fluids in and out.

7. Adsorber dryer according to claim 6, **characterised in that** each flange comprises, on its internal face, devices (10) and (11) for spatially diffusing the gaseous fluid, in order to distribute said fluid over the portion of the chamber in question, which, in particular, for the so-called outer chamber, is annular.

8. Adsorber dryer according to claim 7, **characterised in that** the means for diffusing the gas into the outer annular chamber is a spiral spring.
